Europäisches Patentamt

**European Patent Office**

Office européen des brevets

(19)

(11) Numéro de publication : **0 308 291 B1**

(12) **FASCICULE DE BREVET EUROPEEN**

(45) Date de publication du fascicule du brevet :
**21.08.91 Bulletin 91/34**

(51) Int. Cl.$^5$ : **B30B 1/00, F16B 43/00,**
**F03G 7/06, F16F 1/32**

(21) Numéro de dépôt : **88402202.1**

(22) Date de dépôt : **01.09.88**

(54) **Dispositif pour exercer sur une pièce une pression évoluant par paliers.**

(30) Priorité : **04.09.87 FR 8712293**

(43) Date de publication de la demande :
**22.03.89 Bulletin 89/12**

(45) Mention de la délivrance du brevet :
**21.08.91 Bulletin 91/34**

(84) Etats contractants désignés :
**CH DE ES GB IT LI SE**

(56) Documents cités :
**FR-A- 2 133 084**
**GB-A- 2 029 928**
**GB-A- 2 102 904**
**US-A- 3 613 732**

(56) Documents cités :
**PRODUCT ENGINEERING, vol. 50, no. 6, juin
1979, pages 37-40, Morgan-Grampian Publishing Corp., New York, US; F. YEAPLE: "Master
the mysteries of spring washers"**
**MECHANICAL ENGINEERING, vol. 102, no. 3,
mars 1980, pages 42-43, New York, US; K.N.
MELTON et al.: "Alloys with two-way shape
memory effect"**

(73) Titulaire : **AEROSPATIALE Société Nationale
Industrielle**
**37, Boulevard de Montmorency**
**F-75781 Paris Cédex 16 (FR)**

(72) Inventeur : **Blin, Michel**
**75bis, voie des Postes**
**F-91620 La Ville du Bois (FR)**

(74) Mandataire : **Mongrédien, André et al**
**c/o SOCIETE DE PROTECTION DES
INVENTIONS 25, rue de Ponthieu**
**F-75008 Paris (FR)**

# Description

L'invention concerne un dispositif comprenant au moins une série de rondelles ressorts réalisées en un alliage à mémoire de forme, de façon à passer d'une forme plane à une forme tronconique ou inversement, lors du franchissement d'un seuil de température donné. Un tel dispositif permet d'appliquer une pression évoluant par paliers sur une pièce soumise à un cycle de températures préétabli.

Dans certaines applications telles que le collage et la polymérisation de pièces en matériaux composites, le chauffage des pièces doit s'accompagner d'une mise en pression dont il est souhaitable qu'elle n'intervienne que lors du franchissement d'une certaine température. De façon plus générale, la fabrication des pièces en matériaux composites nécessite de soumettre simultanément ces pièces à des cycles de température et de pression bien déterminés.

Pour fabriquer des pièces de géométrie simple, on utilise actuellement des presses chauffantes hydrauliques. Sur ces presses, les pièces sont soumises aux cycles de pression désirés par des outillages du type moule-contre moule, alors que le cycle de chauffage est déterminé par le système de chauffage de la presse.

Ces presses chauffantes hydrauliques ont pour principaux inconvénients qu'elles ne permettent pas de fabriquer des pièces de forme complexe et qu'il n'est pas possible de fabriquer simultanément sur une même presse des pièces nécessitant l'application de cycles de pression différents.

Pour fabriquer des pièces en matériaux composites présentant des formes complexes, on utilise actuellement des autoclaves, à l'intérieur desquels les pièces sont généralement moulées entre une forme rigide et une vessie. Cette technique a pour avantage de permettre la fabrication simultanée de pièces de formes et de dimensions différentes. Cependant, il s'agit d'une technique coûteuse et la fabrication simultanée de plusieurs pièces dans un même autoclave n'est possible qu'à condition que ces pièces acceptent les mêmes cycles de température et de pression.

Parmi les installations existant actuellement pour fabriquer des pièces en matériau composite, aucune d'entre elles ne permet donc de traiter simultanément plusieurs pièces dont la fabrication nécessite des cycles de pression différents pour un même cycle de température.

La présente invention a pour premier objectif de permettre la fabrication de pièces en matériau composite de formes quelconques à l'aide d'une installation simplifiée comportant une étuve ventilée servant à appliquer sur les pièces le cycle de température souhaité.

A cet effet, il est proposé de soumettre les pièces individuellement au cycle de pression nécessaire notamment à leur collage et à leur polymérisation, en utilisant des dispositifs en alliage à mémoire de forme. Plus précisément, avant d'être placée dans l'étuve ventilée, chacune des pièces est montée dans un outillage du type moule-contre moule. Des dispositifs en alliage à mémoire de forme sensibles au cycle de température défini par l'étuve agissent sur l'ensemble moule-contre moule pour exercer individuellement sur la pièce correspondante un cycle de pression bien déterminé. En associant à chaque pièce un ou plusieurs dispositifs appropriés, il devient ainsi possible de traiter dans une même étuve des pièces nécessitant des cycles de pression différents.

Il est rappelé qu'un alliage à mémoire de forme est un matériau qui, déformé plastiquement en-dessous d'une température critique Tc, reprend sa forme initiale dès que sa température s'élève au-dessus de cette température Tc. Cette caractéristique est le résultat d'un changement de structure cristalline à la température Tc, dû à une transformation de phase réversible à l'état solide entre un état austénitique et un état martensitique.

Parmi les alliages à mémoire de forme, on distingue les alliages à mémoire simple des alliages à mémoire réversible. Dans les alliages à mémoire simple, une déformation subie à l'état martensitique s'annule définitivement lors du passage à l'état austénitique. Au contraire, dans les alliages à mémoire réversible, une déformation subie à l'état martensitique s'annule lors du passage à l'état austénitique mais se retrouve lors d'un passage ultérieur à l'état martensitique. La transformation inverse s'effectue alors avec une certaine hystérésis.

Les températures critiques Tc correspondant au passage de l'état martensitique à l'état austénitique peuvent être ajustées dans une gamme de températures assez large comprise entre environ –200°C et +120°C en variant la composition de l'alliage. Pour des températures proches de –200°C, on utilise généralement des alliages TiNi alors que des températures approchant +120°C peuvent être obtenues au moyen d'alliage CuZnAl ou CnZnNi. Des études montrant l'évolution de la température critique Tc en fonction de l'alliage ont notamment été publiées par E. Aernoudt et al. sous le titre "Copacity for shape memory and High Damping in CuZnAl Alloys" dans Metall, dec. 1977, vol.31.

En pratique, la fabrication de pièces à effet de mémoire de forme est délicate, notamment en ce qui concerne la composition de l'alliage et surtout les traitements thermiques et d'éducation. Dans l'état actuel de la technique, des pièces en alliage à mémoire de forme ne peuvent donc être fabriquées qu'à la demande, ce qui implique des délais de fabrication très importants, inacceptables lorsqu'il faut réaliser dans de brefs délais des pièces uniques, comme c'est souvent le cas dans le domaine de l'outillage servant à la fabrication des pièces en matériau composite.

Compte tenu des impératifs industriels, il n'est donc pas raisonnable d'envisager la fabrication de dispositifs à mémoire de forme adaptés à chacune des pièces en matériau composite à fabriquer, dans le cadre d'une installation utilisant une simple étuve ventilée.

Pour résoudre ce problème, il est proposé conformément à l'invention d'utiliser des dispositifs à mémoire de forme constitués par l'assemblage de plusieurs éléments modulaires constitués par des rondelles coniques pouvant être fabriquées en quantités importantes alors que le nombre de types différents de rondelles peut être très limité.

Plus précisément, l'invention concerne un dispositif pour appliquer une pression évoluant par paliers sur une pièce soumise à un cycle de température préétabli, ce dispositif étant caractérisé en ce qu'il comprend au moins un empilement de rondelles élémentaires montées sur une tige pourvue de butées à ses extrémités et traversant deux plaques de pression entre lesquelles est placée ladite pièce, cet empilement comprenant au moins une série de rondelles ressorts réalisées en un alliage à mémoire de forme, de façon à passer d'une forme plane à une forme tronconique lors du franchissement de seuils de température donnés dudit cycle de température.

On comprend aisément qu'en empilant un nombre différent de rondelles, en variant le sens de cet empilement et éventuellement en y ajoutant des rondelles ressort classiques normalisées, on peut appliquer sur une pièce donnée un cycle de pression pouvant varier dans de grandes proportions, même si toutes les rondelles ressorts en alliage à mémoire de forme sont identiques. Si on dispose en plus de plusieurs types de rondelles ressorts en alliage à mémoire de forme, ces possibilités sont encore très largement accrues.

Les rondelles ressorts en alliage à mémoire de forme peuvent être réalisées soit en alliage à mémoire de forme simple, soit en alliage à mémoire de forme réversible. Ces rondelles ressorts peuvent également présenter soit une forme conique, soit une forme plane en-dessous d'un seuil de température donné.

Chaque empilement de rondelles peut comprendre au moins une série de rondelles montées en opposition et/ou au moins une série de rondelles montées dans le même sens.

De préférence, toutes les rondelles de l'empilement ont un diamètre intérieur identique et un diamètre extérieur identique, ces diamètres étant par exemple les mêmes que ceux des rondelles ressorts normalisées, afin de permettre l'utilisation de ces dernières dans certains empilements.

L'invention va maintenant être décrite plus en détail, à titre d'exemple nullement limitatif, en se référant aux dessins annexés dans lesquels :

— les figures 1 et 2 représentent les diagrammes pression P/épaisseur x de deux rondelles ressort réalisées respectivement en un alliage à mémoire de forme réversible R et en un alliage à mémoire de forme simple S ;

— la figure 3 représente un empilement de rondelles ressorts utilisable dans le dispositif selon l'invention, montées en opposition ;

— la figure 4 représente un empilement de rondelles ressorts utilisable dans le dispositif selon l'invention, montées dans le même sens ;

— la figure 5 représente schématiquement une partie d'un dispositif selon l'invention, comportant un empilement formé de trois types de rondelles élémentaires différentes montées sur une tige afin d'appliquer un cycle de pression donné à une pièce ;

— la figure 6 représente le diagramme pression P/épaisseur x de l'empilement de la figure 5 à différentes températures T ;

— la figure 7 représente le cycle de pression P en fonction de la température T obtenu à l'aide de l'empilement de la figure 5 ;

— la figure 8 représente schématiquement une partie d'un dispositif comparable à celui de la figure 5, dans lequel la réalisation de l'empilement de rondelles élémentaires permet d'obtenir un cycle de pression incluant des phases de décroissance de la charge ;

— la figure 9 représente le cycle d'évolution de la pression P de l'assemblage de la figure 8 en fonction de la température T ; et

— la figure 10 représente schématiquement un dispositif utilisant des rondelles ressorts conformes à l'invention et pouvant être placé dans une étuve ventilée pour fabriquer une pièce en matériau composite.

Comme on l'a déjà mentionné, l'invention utilise des rondelles ressorts réalisées en alliage à mémoire de forme, de façon à passer d'une forme plane à une forme tronconique lors du franchissement d'un seuil de température donné.

Par convention, on affectera du signe (+) les rondelles élastiques dont le changement de forme consécutif au passage de l'état martensitique à l'état austénitique correspond au passage de la forme plate à la forme conique. Inversement, on affectera du signe (–) les rondelles dans lesquelles ce changement de forme correspond au passage de la forme conique à la forme plate.

Etant donné que l'effet de mémoire de forme du matériau constituant la rondelle peut être simple (S) ou réversible (R), il existe donc, pour une même dimension et pour une température critique de transformation donnée (Tc), quatre types de rondelles qui peuvent être désignés par les symboles $S^+$, $R^+$, $S^-$, $R^-$

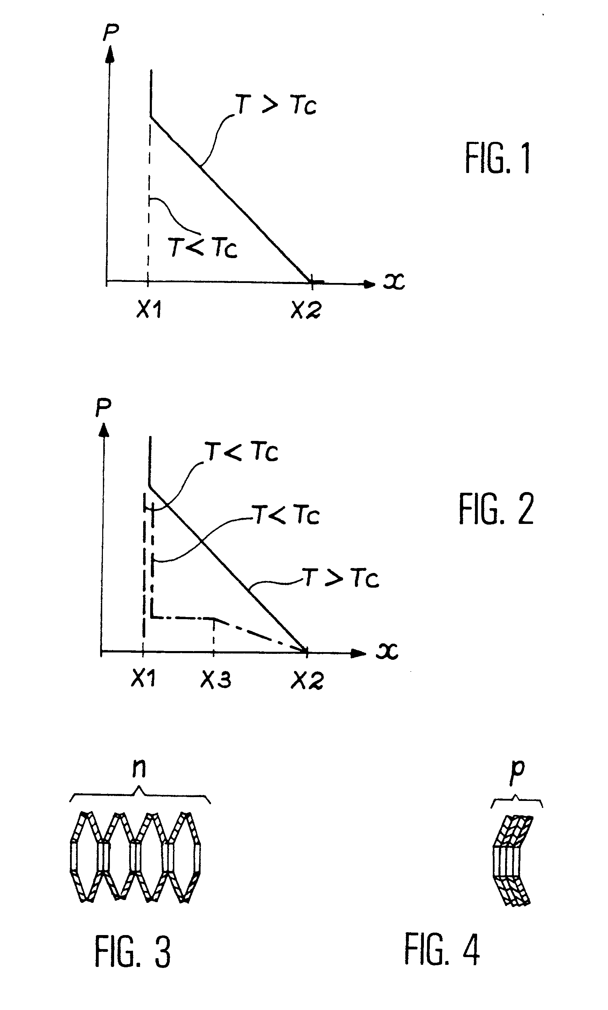

Sur la figure 1, on a représenté le diagramme pression P/épaisseur x d'une rondelle de type $R^+$. On voit en pointillé sur cette figure qu'en-dessous de la température critique Tc, cette rondelle, d'épaisseur

$X_1$, est incompressible. Au contraire, comme le représente la courbe en trait plein de la figure 1, au-dessus de la température Tc, la rondelle prend une forme conique d'épaisseur $X_2$ à l'état libre, cette épaisseur décroissant jusqu'à $X_1$ lorsque la pression augmente. La pente K de la courbe correspond à la raideur. Lorsque la température redescend en-dessous de Tc, la forme de la rondelle se modifie à nouveau et cette rondelle redevient plate.

Sur la figure 2, on a représenté le diagramme pression P/épaisseur x d'une rondelle ressort de type $S^+$ conforme à l'invention. Comme précédemment, en-dessous de la température critique Tc, la rondelle est plate, d'épaisseur $X_1$, et incompressible (courbe en pointillés). Au-dessus de cette température Tc, la rondelle devient conique et présente une courbe de raideur K (courbe en trait plein). Enfin, lorsque la température redescend en-dessous de Tc (courbe en traits mixtes), la rondelle reste conique mais sa raideur $K'$ est inférieure à la raideur K. Lorsque l'épaisseur de la rondelle devient inférieure à une valeur $X_3$, la déformation de la rondelle peut devenir plastique.

Sur la figure 3, on a représenté un empilement de $\underline{n}$ rondelles ressorts identiques, ces rondelles étant des rondelles de type $R^+$ ou $S^+$ montées en opposition. Par rapport à une rondelle unitaire, la raideur de l'ensemble est divisée par $\underline{n}$ et l'amplitude maximale de la déformation de l'empilement est multipliée par $\underline{n}$.

La figure 4 montre que $\underline{p}$ rondelles ressorts conformes à l'invention, de type $R^+$ ou $S^+$, peuvent aussi être empilées dans le même sens. Par rapport à une rondelle unitaire, la raideur de l'ensemble est alors multipliée par $\underline{p}$, ainsi que la pression maximum admissible. Au contraire, l'amplitude maximale de la déformation est inchangée.

Bien entendu, les empilements des figures 3 et 4 peuvent être combinées. Ainsi, en empilant en opposition $\underline{n}$ groupes de $\underline{p}$ rondelles empilées dans le même sens, on obtient une raideur multipliée par p/s, une pression maximum multipliée par $\underline{p}$ et une amplitude maximum multipliée par $\underline{n}$ par rapport à une rondelle unitaire, en admettant que toutes les rondelles sont identiques.

Une raideur variable peut aussi être obtenue en empilant en opposition $\underline{n}$ groupes formés chacun d'un nombre $\underline{p}$ de rondelles différent empilées dans le même sens.

Ainsi, il est possible, conformément à l'invention, à partir d'un type unique de rondelles, d'obtenir une large gamme d'amplitude de déplacement et de raideur. L'objectif fixé est donc clairement atteint.

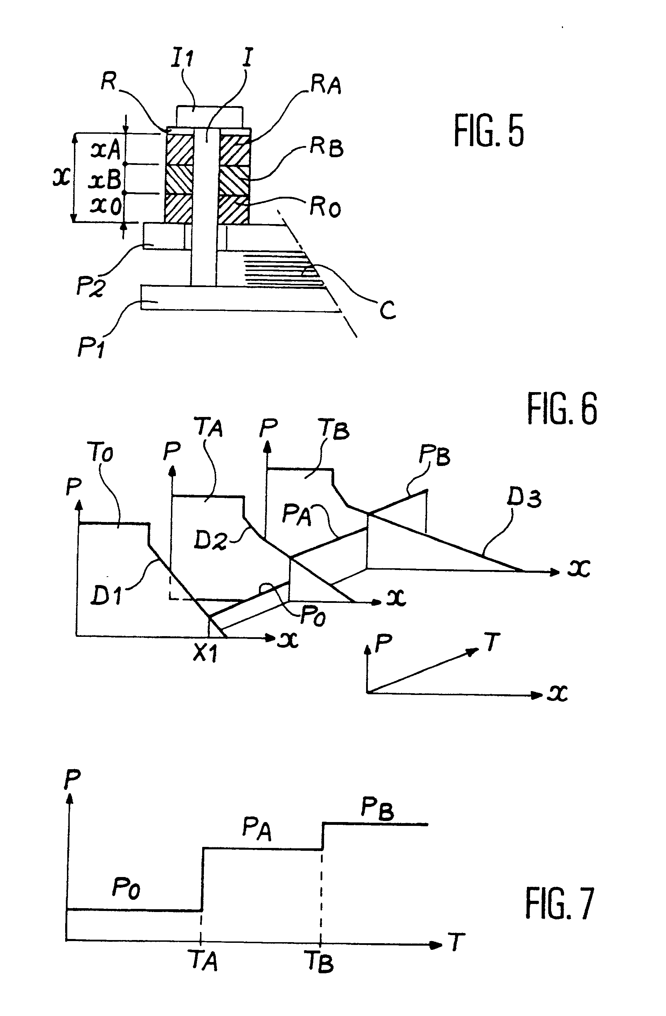

Sur la figure 5, on a représenté très schématiquement un montage comprenant un empilement formé de rondelles élastiques de trois types différents, mais présentant les mêmes diamètres intérieur et extérieur. Plus précisément, cet empilement comprend un premier ensemble de rondelles élastiques en alliage à mémoire de forme $R_A$ ayant une température critique $T_A$, un deuxième ensemble de rondelles ressorts en alliage à mémoire de forme $R_B$ ayant une température critique $T_B$ différente de la température critique $T_A$, et un troisième ensemble formé de rondelles élastiques classiques $R_O$. Les épaisseurs de chacun de ces ensembles de rondelles sont désignées respectivement par $x_A$, $x_B$ et $x_O$ sur la figure 5, alors que l'épaisseur de l'ensemble de l'empilement est désignée par x. Les rondelles $R_A$ et $R_B$ sont toutes de type $R^+$.

Cet empilement de rondelles est monté sur une tige I fixée sur une plaque $P_1$ à une extrémité et dont l'extrémité opposée est pourvue d'une tête $I_1$ sur laquelle l'empilement de rondelles est en appui par l'intermédiaire d'une rondelle plate R. A son extrémité opposée, l'empilement de rondelles $R_A$, $R_B$, et $R_O$ est en appui sur une deuxième plaque $P_2$ que traverse la tige I. Enfin, la pièce C sur laquelle on désire appliquer un cycle de pression donné est placée entre les plaques $P_1$ et $P_2$. Comme on le verra ultérieurement, plusieurs assemblages de ce type agissent de préférence simultanément sur les plaques $P_1$ et $P_2$.

A tout instant, la pression ou charge P est la même dans chacune des trois séries de rondelles constituant l'empilement de la figure 5. A chacun des ensembles de rondelles $R_A$, $R_B$ et $R_O$ correspond un diagramme pression P/épaisseur x du type de celui des figures 1 et 2. Le diagramme pression P/épaisseur x représentant le comportement de l'ensemble s'obtient en sommant, pour une pression donnée, chacun des trois diagrammes ainsi obtenus.

Ainsi, tant que la température reste inférieure aux températures critiques $T_A$ et $T_B$ des rondelles $R_A$ et $R_B$, le diagramme pression/épaisseur représentant le comportement de l'ensemble est analogue au diagramme pression/épaisseur de l'empilement de rondelles ordinaires $R_O$, augmenté des épaisseurs des rondelles $R_A$ et $R_B$ qui sont alors plates. Le diagramme pression P/épaisseur x correspondant apparaît en $D_1$ sur la figure 6.

Lorsque la température est comprise entre les températures critiques $T_A$ et $T_B$, le diagramme pression/épaisseur représentant le comportement de l'ensemble de l'empilement correspond à la somme des diagrammes pression/épaisseur des rondelles ordinaires $R_O$ et des rondelles à mémoire de forme $R_A$, au-dessus de la température $T_A$, augmentée de l'épaisseur des rondelles $R_B$ qui sont alors plates. Ce diagramme est représenté en $D_2$ sur la figure 6.

Enfin, lorsque la température est supérieure à la fois aux températures critiques $T_A$ et $T_B$, le diagramme pression P/épaisseur x représentant le comportement de l'ensemble de l'empilement correspond à la somme des diagrammes pression/épaisseur des rondelles $R_O$, $R_A$ et $R_B$, respectivement au-dessus des températures critiques $T_A$ et $T_B$ pour ces dernières. Le diagramme correspondant est représenté en $D_3$ sur la

figure 6.

Dans les cas où la pièce C est un matériau peu compressible, l'épaisseur x de l'ensemble de l'empilement peut être considérée comme constante et égale à $X_l$. Comme on le voit sur la figure 6, la pression P correspondant à cette épaisseur $X_l$ prend trois valeurs différentes $P_O$, $P_A$ et $P_B$ selon que la température est inférieure à $T_A$ (diagramme $D_1$), comprise entre $T_A$ et $T_B$ (diagramme $D_2$), ou supérieure à $T_B$ (diagramme $D_3$). Ainsi, et comme l'illustre plus précisément la figure 7, dans le cas d'un matériau peu compressible, le cycle de pression P appliqué sur la pièce C par l'empilement de la figure 5 lorsque la température T s'élève progressivement à partir de l'ambiante correspond à une augmentation de la pression par paliers, cette pression passant de la valeur $P_O$ à la valeur $P_A$ lors du franchissement de la température $T_A$, puis de la valeur $P_A$ à la valeur $P_B$ lors du franchissement de la température $T_B$.

Un choix judicieux des rondelles $R_O$, $R_A$ et $R_B$ et du nombre de chacune d'entre elles permet de donner aux pressions $P_O$, $P_A$ et $P_B$ les valeurs désirées.

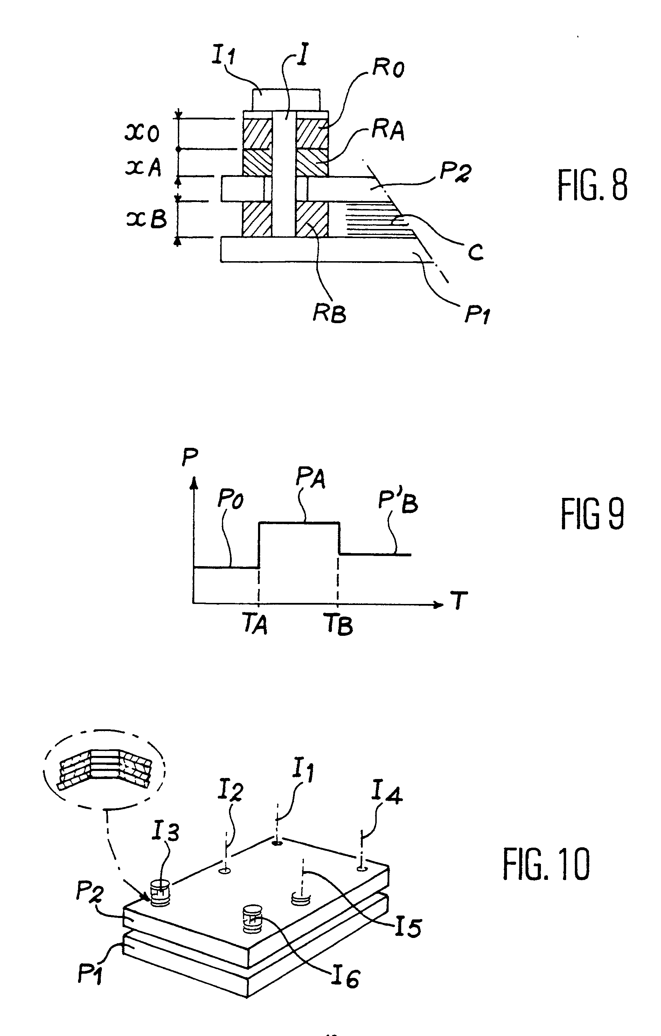

La figure 8 est une figure comparable à la figure 5, montrant que l'empilement des rondelles $R_A$, $R_B$ et $R_O$ sur la tige I peut être réalisé de façon différente. Plus précisément, alors que les rondelles $R_O$ et $R_A$ restent placées entre la tête $I_1$ de la tige I et la plaque $P_2$, les rondelles $R_B$ sont interposées dans ce cas entre les plaques $P_1$ et $P_2$, comme la pièce C.

Grâce à cet agencement et comme l'illustre la figure 9, il est possible de soumettre la pièce C à un cycle de pression P en fonction de la température T présentant une décroissance de la pression lors du franchissement de la température $T_B$. Plus précisément, lorsque la température T augmente en franchissant successivement les températures critiques $T_A$ et $T_B$, la pression P augmente de $P_O$ à $P_A$ lors du franchissement de la température $T_A$, puis diminue de $P_A$ à $P'_B$ lors du franchissement de la température $T_B$.

Sur la figure 10, on a représenté de façon très schématique un outillage utilisant des empilements de rondelles conformément à l'invention, cet outillage étant destiné à réaliser la stratification d'une pièce en matériau composite telle qu'un capot en composite verre/époxy préimprégné.

La pièce est placée entre deux plaques $P_1$ et $P_2$ reliées entre elles par six tiges $I_1$ à $I_6$ régulièrement réparties à la périphérie des plaques. Ces plaques sont de forme rectangulaire et leurs dimensions sont par exemple de 300 mm sur 150 mm, le diamètre de chaque tige étant d'invention 12 mm.

La pression de stratification étant de 3 daN/cm² et les températures de mise en pression et de polymérisation étant respectivement de 80°C et 120°C, des empilements de rondelles selon l'invention placés sur chacun des axes $I_1$ à $I_6$ sont conçus pour exercer un effort de 225 daN au-dessus de 80°C.

Conformément à l'invention, ce résultat est obtenu en plaçant sur chacune des tiges $I_1$ à $I_6$ un empilement de quatre rondelles de type R+, en alliage CuZnAl, de diamètre extérieur 24 mm, d'épaisseur 1 mm sous forme plate et en les faisant travailler à une flèche inférieure à 1 mm. La composition de l'alliage CuZnAl est choisie à l'aide des tables connues (voir l'article de E. Aernoudt et al. précédemment cité) afin que sa température critique soit égale à 80°C.

L'ensemble ainsi formé est placé dans une étuve ventilée et la température est élevée progressivement de l'ambiante à environ 120°C à la vitesse d'environ 2°C par minute. Lors du passage de la température critique de 80°C des rondelles, une pression de 0,7 MPa est appliquée automatiquement sur la pièce par les empilements de rondelles, conformément à l'invention. La pièce est ensuite maintenue pendant environ deux heures à 120°C, en étant toujours soumise à la pression de 0,7 MPa par les empilements de rondelles. Elle est ensuite refroidie librement par simple coupure du chauffage, la pression se relâchant automatiquement lors du passage à la température critique de 80°C, grâce à la réversibilité de l'effet de mémoire de forme de l'alliage constituant les rondelles.

Un exemple d'application de l'empilement décrit précédemment en se référant à la figure 8 permettant d'obtenir un cycle de pression incluant une partie décroissante concerne la fabrication des matériaux préimprégnés de résine phénolique. Ainsi, un outillage comparable à celui de la figure 10 utilisant des empilements du type de celui qui est représenté sur la figure 8 peut permettre d'effectuer successivement la polymérisation sous une pression $P_A$ à une température $T_A$, puis la post-cuisson à une température $T_B$ supérieure à $T_A$, avec application d'une pression $P'_B$ inférieure à $P_A$, afin d'éviter le gauchissement.

## Revendications

1. Dispositif pour appliquer une pression évoluant par paliers sur une pièce soumise à un cycle de températures préétabli, caractérisé en ce qu'il comprend au moins un empilement de rondelles élémentaires ($R_O$, $R_A$, $R_B$) montées sur une tige (I) pourvue de butées ($I_1$, $P_1$) à ses extrémités et traversant deux plaques de pression ($P_1$, $P_2$) entre lesquelles est placée ladite pièce (C), cet empilement comprenant au moins une série de rondelles ressorts ($R_A$, $R_B$) réalisées en alliage à mémoire de forme, de façon à passer d'une forme plane à une forme tronconique lors du franchissement de seuils de température (Tc) donnés dudit cycle de températures.

2. Dispositif selon la revendication 1, caractérisé en ce que l'empilement comprend au moins une série de rondelles montées en opposition (figure 3).

3. Dispositif selon l'une quelconque des revendications 1 et 2, caractérisé en ce que l'empilement comprend au moins une série de rondelles montées dans le même sens (figure 4).

4. Dispositif selon l'une quelconque des revendications 1 à 3, caractérisé en ce que toutes les rondelles ($R_O$, $R_A$, $R_B$) de l'empilement ont un diamètre intérieur identique et un diamètre extérieur identique.

5. Dispositif selon l'une quelconque des revendications 1 à 4, caractérisé en ce qu'au moins certaines des rondelles ressorts ($R_A$, $R_B$) sont réalisées en un alliage à mémoire de forme simple (S).

6. Dispositif selon l'une quelconque des revendications 1 à 5, caractérisé en ce qu'au moins certaines des rondelles ressorts ($R_A$, $R_B$) sont réalisées en un alliage à mémoire de forme réversible (R).

7. Dispositif selon l'une quelconque des revendications 1 à 6, caractérisé en ce qu'au moins certaines des rondelles présentent une forme plane en-dessous d'un seuil de température donné (+).

8. Dispositif selon l'une quelconque des revendications 1 à 7, caractérisé en ce qu'au moins certaines des rondelles présentent une forme tronconique en-dessous d'un seuil de température donné (−).


## Patentansprüche

1. Vorrichtung zur Übertragung von durch Lager hervorgerufenen Druckschwankungen auf einen Gegenstand, der einem vorgegebenen Temperaturcyclus ausgesetzt ist, **dadurch gekennzeichnet,** daß diese mindestens eine Stapelanordnung aus Elementarscheiben ($R_O$, $R_A$, $R_B$) umfaßt, die auf einer an ihren Enden mit Anschlägen ($I_1$, $P_1$) versehenen Stange (I) gelagert sind, wobei die Stange zwei Druckplatten ($P_1$, $P_2$) durchgreift, zwischen welchen der Gegenstand (C) angeordnet ist, und wobei diese Stapelanordnung mindestens eine Reihe von Ringfederscheiben ($R_A$, $R_B$) umfaßt, die aus einer Legierung mit Formerinnerungsvermögen gebildet sind, so daß sie bei Überschreitung der von dem Temperaturcyclus gegebenen Schwellentemperaturen (Tc) von einer flachen Form in eine kegelstumpfartige Form übergehen.

2. Vorrichtung nach Anspruch 1, **dadurch gekennzeichnet,** daß die Stapelanordnung mindestens eine Reihe von einander gegenüberliegenden Scheiben (Fig. 3) umfaßt.

3. Vorrichtung nach einem der Ansprüche 1 und 2, **dadurch gekennzeichnet,** daß die Stapelanordnung mindestens eine Reihe von in gleicher Richtung angeordneten Scheiben (Fig. 4) umfaßt.

4. Vorrichtung nach einem der Ansprüche 1 bis 3, **dadurch gekennzeichnet,** daß alle Scheiben ($R_O$, $R_A$, $R_B$) der Stapelanordnung einen identischen Innendurchmesser und einen identischen Außendurchmesser aufweisen.

5. Vorrichtung nach einem der Ansprüche 1 bis 4, **dadurch gekennzeichnet,** daß zumindest einige Ringfederscheiben ($R_A$, $R_B$) aus einer Legierung mit einfachem Formerinnerungsvermögen (S) gebildet sind.

6. Vorrichtung nach einem der Ansprüche 1 bis 5, **dadurch gekennzeichnet,** daß zumindest einige Ringfederscheiben ($R_A$, $R_B$) aus einer Legierung mit reversiblem Formerinnerungsvermögen (R) gebildet sind.

7. Vorrichtung nach einem der Ansprüche 1 bis 6, **dadurch gekennzeichnet,** daß zumindest einige Scheiben unterhalb einer gegebenen Schwellentemperatur (+) eine flache Form aufweisen.

8. Vorrichtung nach einem der Ansprüche 1 bis 7, **dadurch gekennzeichnet,** daß zumindest einige Scheiben unterhalb einer gegebenen Schwellentemperatur (−) eine kegelstumpfartige Form aufweisen.


## Claims

1. Device for applying a pressure developing in stages to a part exposed to a predetermined temperature cycle, said device being characterized in that it comprises at least one stack of elementary washers ($R_O$, $R_A$, $R_B$) mounted on a rod (I) provided with abutments ($I_1$, $P_1$) at its ends and transversing two pressure plates ($P_1$, $P_2$) beetween which said part (C) is placed, said stack having at least one series of spring washers ($R_A$, $R_B$) made from a shape memory alloy, so as to pass from a planar or flat shape to a truncated cone shape on exceeding given temperature thresholds (Tc) of said temperature cycle.

2. Device according to claim 1, characterized in that the stack comprises at least one series of washers mounted in opposition (Fig. 3).

3. Device according to either of the claims 1 and 2, characterized in that the stack comprises at least one series of washers mounted in the same sense (Fig. 4).

4. Device according to any one of the claims 1 to 3, characterized in that all the washers ($R_O$, $R_A$, $R_B$) of the stack have an identical internal diameter and an identical external diameter.

5. Device according to any one of the claims 1 to 4, characterized in that at least some of the spring washers ($R_A$, $R_B$) are made from a simple shape memory alloy (S).

6. Device according to any one of the claims 1 to 5, characterized in that at least certain of the spring washers ($R_A$, $R_B$) are made from a reversible shape memory alloy (R).

7. Device according to any one of the claims 1 to 6, characterized in that at least some of the washers have a planar shape below a given temperature threshold (+).

8. Device according to any one of the claims 1 to 7, characterized in that at least some of the washers have a truncated cone shape below a given tempera-

ture threshold (–).

FIG. 1

FIG. 2

FIG. 3

FIG. 4

FIG. 5

FIG. 6

FIG. 7

FIG. 8

FIG 9

FIG. 10